# EUROPEAN PATENT APPLICATION

(11) **EP 4 717 615 A1**
(43) Date of publication of application: **01.04.2026**
(21) Application number: 25199373.9
(22) Date of filing: 01.09.2025
(51) Int. Cl.: B65B 29/02

(54) **METHOD AND PLANT FOR THE MANUFACTURE OF CAPSULES, IN A CELLULOSE-BASED MATERIAL, FOR THE PREPARATION OF BEVERAGES**

(30) Priority: 27.09.2024 IT 202400021444
(71) Applicant: Opem S.p.A., 43122 Parma (IT)
(72) Inventor: BINACCHI, Fabio, 43058 SORBOLO MEZZANI (PR) (IT)
(74) Representative: Corradini, Cesare

(57) **Abstract**

A method and a plant for the manufacture of capsules (500) for the preparation of beverages are described, comprising at least the steps of: arranging a first strip (530) of a cellulose-based material, obtaining from said first strip (530) a plurality of concave capsule bodies (505), each of which defines an internal volume (515) open at a mouth (520), filling one or more of said capsule bodies (505) with a dose of an edible substance adapted to make the beverage, and sealing the mouth (520) of the filled capsule bodies (505), with a lid (510) of a cellulose-based material; wherein the step of obtaining the capsule bodies (505) provides for: engaging said first strip (530) to slide in a preset path, along which it has at least one stretched section (540), pressing said stretched section of the first strip (530) by means of a shaped mould (115) adapted to deform one or more portions of said stretched section (540), giving each of them a concave shape defining a respective capsule body (505), and separating each of said portions from the first strip (530).

## Description

### Technical field

The present invention relates to a method and a plant for the manufacture of capsules intended for the preparation of beverages, for example coffee.

### Prior art

One of the most popular methods currently used for the preparation of coffee and/or other similar beverages is to use machines, so-called extractors, which extract the beverage from a disposable pre-packaged capsule, through an infusion and/or percolation process. The capsules used with these machines generally comprise a concave body, having for example the shape of a glass or little cup, which is filled with a dose of an edible substance, for example ground roasted coffee, capable of producing the beverage by contact with hot water, and a lid, for example a thin foil, which is welded to the mouth of the capsule body so as to seal it.

Some of these capsules are made of aluminium while others are made of polymeric material, in both cases causing non-negligible disposal difficulties.

To cope with these difficulties, capsules made with cellulose-based materials have been proposed, which can be entirely biodegradable and thus more easily disposed of.

Generally, these capsules are obtained from an incoherent mass of cellulose pulp which is then pressed inside a special mould, so as to give it the shape of the capsule body, which is then filled with the dose of the edible substance and finally sealed with a lid also made of biodegradable material.

### Disclosure of the invention

An object of the present invention is to make available a method and a plant for the manufacture of capsules in cellulose-based, preferably biodegradable, material which can be more efficient and productive than those currently used.

Another object is that of achieving such objective within the context of a simple, rational and relatively cost effective solution.

These and other objects are reached thanks to the characteristics of the invention as set forth in the independent claims. The dependent claims outline preferred and/or particularly advantageous aspects of the invention but not strictly necessary for implementing it. In particular, as anticipated, an embodiment of the invention makes available a method for the manufacture of capsules for the preparation of beverages, for example coffee, comprising at least the steps of:
- arranging a first strip of a cellulose-based, preferably biodegradable, material,
- obtaining from said first strip a plurality of concave capsule bodies, for example in the shape of a glass or cup, each of which defines an internal volume open at a mouth,
- filling one or more of said capsule bodies with a dose of an edible substance adapted to make, for example by infusion and/or percolation, the beverage, for example roasted coffee powder, and
- sealing the mouth of the filled capsule bodies, with a lid of a cellulose-based, preferably biodegradable, material, for example the same material as the first strip, wherein the step of obtaining the capsule bodies provides for:
   - engaging said first strip to slide in a preset path, along which it has at least one stretched section,
   - pressing said stretched section of the first strip by means of a shaped mould adapted to deform one or more portions of said stretched section, giving each of them a concave shape defining a respective capsule body, and
   - separating each of said portions from the first strip.

Thanks to this solution, which provides for forming the capsule bodies from a stretched strip of cellulose-based material, it is advantageously possible to obtain a faster and more effective production compared to solutions that start from an incoherent mass of cellulose pulp.

According to a preferred aspect of the invention, prior to the filling step, the method may further comprise the steps of:
- transferring each capsule body onto a first conveyor, for example a linear conveyor, provided with a plurality of supports, which are movable in succession along a preset path and are individually provided with at least one receiving seat for one of said capsule bodies, more preferably with a plurality of said receiving seats, and
- checking the integrity of the capsule bodies advancing on the first conveyor. This aspect of the invention is advantageous in that, due to the low-plastic nature of the cellulose-based materials, during formation of the capsule bodies, which occurs by deformation of the stretched section of the first strip, some of them could break, be torn or in any case no longer be able to effectively contain the dose of edible substance.

On the other hand, the fact of carrying out this control on the capsule bodies advancing on the first conveyor has the advantage of facilitating their integration in a continuous (or in-line) process.

In particular, the step of checking the integrity of the capsule bodies may provide, for each capsule body, for:
- laying a first covering element at least on the support of the first conveyor in which the capsule body is housed, so that said first covering element hermetically closes the mouth of the capsule body itself,
- sucking air from the internal volume of the capsule body, while the mouth is hermetically closed by the first covering element,
- measuring the pressure prevailing in said internal volume, during and/or after suction, while the mouth is still hermetically closed by the first covering element, and
- identifying the capsule body as intact, if the measured pressure is lower than a predetermined threshold value.

In this way, by measuring the "tightness" of the capsule body to the passage of air, it is advantageously possible to ascertain that said (empty) capsule body does not present tears or cuts.

It is then particularly preferable that the suction and pressure measurement steps take place while the first covering element is advancing, together with the support on which it is laid, along at least a section of the path defined by the first conveyor.

Thanks to this solution, the tightness control takes place in step with the advancement of the first conveyor, giving more time for completing the suction and pressure measurement steps, but without slowing down the advancement of the capsule bodies.

According to one aspect of the invention, the step of checking the integrity of the capsule bodies may also provide for visually inspecting, by taking images, each of the capsule bodies advancing along the path defined by the first conveyor, preferably before the "leak" check.

This inspection can advantageously allow to identify capsule bodies that cannot be considered as intact as, for example, they are deformed or otherwise have a non-compliant shape.

Another aspect of the invention provides that the filling step of the capsule bodies may provide for:
- transferring each intact capsule body from the first conveyor to a second conveyor provided with a plurality of supports, which are movable in succession along a preset path and are individually provided with at least one receiving seat for one of said intact capsule bodies, more preferably of a plurality of said receiving seats,
- dispensing, for example by means of a dosing device, the dose of edible substance inside each intact capsule body, when the latter, by advancing along the path defined by the second conveyor, is at a predetermined filling position.

In this way, the filling step is advantageously brought into line with the integrity checking step, increasing the productivity of the entire manufacturing process.

According to one aspect of the invention, the method may comprise the step of compacting, prior to the sealing step, the dose of edible substance contained in the filled capsule bodies.

This operation has the advantage of stabilizing the edible substance in the capsule bodies and making it more suitable for the preparation of the beverage.

In particular, the compaction step may provide for compressing, for example by means of a pad, the dose of edible substance contained inside each filled capsule body, when the latter, by advancing along the path defined by the second conveyor, is at a predetermined pressing position that is located downstream of the filling position (with respect to the direction of advancement of the supports).

In this way, this operation is also advantageously brought into line with the other steps of the process.

According to another aspect of the invention, the method may comprise the step of washing the capsule bodies, before filling, by blowing with a neutral gas.

This operation has the advantage of removing any impurities, such as dust grains, from the (empty) capsule bodies, which could otherwise contaminate the edible substance with which they will be filled.

In particular, the washing step may provide for blowing, for example by means of one or more blowing nozzles, the neutral gas inside each intact capsule body, when the latter, by advancing along the path defined by the second conveyor, is at a predetermined washing position that is located upstream of the filling position (with respect to the direction of advancement of the supports).

In this way, this operation is also advantageously brought into line with the other steps of the process.

A further aspect of the invention provides that the step of sealing the mouth of the filled capsule bodies may provide for:
- arranging a second strip of a cellulose-based, preferably biodegradable, material, for example the same material as the first strip,
- obtaining from said second strip a plurality of said lids,
- transferring each of said lids to lay on the mouth of a respective filled capsule body, and
- welding each lid to the mouth of the filled capsule body on which it is laid.

This aspect of the invention provides a particularly fast and effective solution for making the lids and joining them to the respective capsule bodies at the same time as the other process steps.

In particular, the step of transferring the lids can provide for laying one of said lids on the mouth of each filled capsule body, when the latter, by advancing along the path defined by the second conveyor, is in a predetermined closing position that is located downstream of the filling position, and possibly of the pressing position (with respect to the direction of advancement of the supports).

In this way, this operation is also advantageously brought into line with the other steps of the process.

Substantially for the same reason, the step of welding the lids may also provide for welding each lid on the mouth of the respective filled capsule body, when the latter, by advancing along the path defined by the second conveyor, is located at a predetermined welding position that is located downstream of the closing position (with respect to the direction of advancement of the supports).

However, it is not excluded that, in other embodiments, the welding can take place when the capsule body is still in the closing position, simultaneously or in any case immediately after the lid has been laid on the mouth.

According to another aspect of the invention, the step of obtaining the lids may provide for:
- engaging said second strip to slide along a preset path, along which it has at least one stretched section,
- punching said stretched section of the second strip, by means of a punch, so as to separate one or more portions (for example discoidal) thereof individually defining one of said lids.

In this way, a particularly simple and quick solution to obtain the lids from the second strip is provided.

In this context, the step of transferring the lids may provide for pushing each lid into contact with the mouth of the respective capsule body, by means of the same punch that performs the punching step of the second strip.

Thanks to this solution, the lids are applied to the capsule bodies immediately after being separated from the second strip, making the overall process faster.

According to another aspect of the invention, the method may further comprise the step of checking the integrity of the sealed capsule bodies.

This aspect of the invention is advantageous in that, due to any tears of the lids or positioning errors thereof, some sealed capsule body (or some finished capsule) could not be perfectly closed and therefore could not be suitable for storing in its inside the dose of edible substance.

In particular, this step of checking the integrity of the sealed capsule bodies may provide, for each sealed capsule body, for:
- laying a second covering element at least on the support of the second conveyor in which the sealed capsule body is housed, so that said second covering element hermetically closes the mouth of the sealed capsule body and defines with the lid of the latter a control volume separated from the internal volume of the capsule body,
- sucking air from the control volume, while the mouth is hermetically closed by the second covering element,
- measuring the pressure prevailing in said control volume, during and/or after air suction, while the mouth is still hermetically closed by the second covering element,
- identifying the sealed capsule body as intact, if the measured pressure is lower than a predetermined threshold value.

In this way, by measuring the "tightness" of the sealed capsule body (i.e. of the finished capsule) to the passage of air, it is advantageously possible to ascertain that the lid of said capsule does not present tears or cuts and that it is correctly positioned.

According to a preferred aspect of the invention, the suction and pressure measurement steps take place while the second covering element is advancing, together with the support on which it is laid, along at least a section of the path defined by the second conveyor. Thanks to this solution, the tightness control takes place in step with the advancement of the second conveyor, giving more time for completing the suction and pressure measurement steps, but without slowing down the advancement of the capsule bodies. According to another aspect of the invention, the step of checking the integrity of the sealed capsule bodies may also provide for visually checking, by taking images, the lid of each sealed capsule body advancing along the path defined by the second conveyor, preferably before the tightness control of the sealed capsule body.

This inspection can advantageously allow to identify lids that cannot be considered as intact as, for example, they are deformed or wrongly positioned.

Another aspect of the invention provides that the method may comprise the step of weighing the sealed and intact capsule bodies.

This weight control makes it possible to ascertain that the capsule bodies (i.e. the finished capsules), in addition to being intact, have been filled with the right dose of edible substance.

In addition to the method outlined above, the invention also makes available a corresponding plant for the manufacture of capsules for the preparation of beverages, for example coffee, which comprises:
- a forming device for obtaining, from a first strip of cellulose-based, preferably biodegradable, material, a plurality of capsule bodies, each of which defines an internal volume open at a mouth,
- means for filling one or more of said capsule bodies with a dose of an edible substance adapted to make, for example by infusion and/or percolation, the beverage, for example roasted coffee powder, and
- means for sealing the mouth of the filled capsule bodies, with a lid of a cellulose-based, preferably biodegradable, material, for example the same material as the first strip,
wherein the forming device comprises:
- means for engaging said first strip to slide in a preset path, along which the first strip has at least one stretched section,
- a press for pressing said stretched section of the first strip with a shaped mould adapted to deform one or more portions of said stretched section, giving each of them a concave shape defining a respective capsule body, and
- means for separating each of said portions from the first strip.

This form of implementation essentially achieves the same advantages as the corresponding method, in particular that of allowing a faster and more efficient production of the capsules compared to the solutions that form the capsule bodies from an incoherent mass of cellulose pulp.

Of course, all aspects of the invention outlined above with reference to the method are applicable, *mutatis mutandis,* also to the plant.

In particular, the plant may further comprise:
- means for transferring each capsule body onto a first conveyor, for example a linear conveyor, provided with a plurality of supports, which are movable in succession along a preset path and are individually provided with at least one receiving seat for one of said capsule bodies, more preferably of a plurality of said receiving seats, and
- means for checking the integrity of the capsule bodies advancing on the first conveyor.

The means for checking the integrity of the capsule bodies may comprise, for each capsule body:
- a first covering element adapted to be laid at least on the support of the first conveyor in which the capsule body is housed, so that said first covering element hermetically closes the mouth of the capsule body itself,
- a vacuum pump to suck air from the internal volume of the capsule body, while the mouth is hermetically closed by the first covering element,
- a pressure sensor for measuring the pressure prevailing in said internal volume, during and/or after suction, while the mouth is still hermetically closed by the first covering element,
- an electronic control unit connected to the pressure sensor and configured to identify the capsule body as intact, if the measured pressure is lower than a predetermined threshold value.

One aspect of the invention also provides that the plant may comprise means for advancing, during suction and measurement, the first covering element together with the support on which it is laid, along at least a section of the path defined by the first conveyor. Another aspect of the invention provides that the means for checking the integrity of the capsule bodies may comprise one or more cameras for taking images of each of the capsule bodies advancing along the path defined by the first conveyor, and that the electronic control unit may be configured to carry out a visual check of said capsule bodies, by means of the images taken by the cameras.

According to another aspect of the invention, the means for filling the capsule bodies may comprise:
- means for transferring each intact capsule body from the first conveyor to a second conveyor provided with a plurality of supports, which are movable in succession along a preset path and are individually provided with at least one receiving seat for one of said intact capsule bodies, more preferably of a plurality of said receiving seats, and
- dosing device adapted to dispense the dose of edible substance inside each intact capsule body, when the latter, by advancing along the path defined by the second conveyor, is at a predetermined filling position.

One aspect of the invention provides that the plant may further comprise means for compacting the dose of edible substance contained in the filled capsule bodies, before the latter are sealed.

These compacting means may comprise, for example, a pad adapted to compress the dose of edible substance contained inside each intact capsule body, when the latter, by advancing along the path defined by the second conveyor, is at a predetermined pressing position that is located downstream of the filling position (with respect to the direction of advancement of the supports).

Another aspect of the invention provides that the plant may comprise means for washing the capsule bodies, before filling, by blowing with a neutral gas.

These washing means may for example comprise one or more nozzles adapted to blow the neutral gas inside each intact capsule body, when the latter, by advancing along the path defined by the second conveyor, is at a predetermined washing position that is located upstream of the filling position (with respect to the direction of advancement of the supports).

According to a different aspect of the invention, the means for sealing the mouth of the capsule bodies may comprise:
- a shearing device for obtaining, from a second strip of a cellulose-based, preferably biodegradable, material, for example of the same material as the first strip, a plurality of lids,
- means for transferring each of said lids to lay on the mouth of a respective filled capsule body, and
- means for welding each lid to the mouth of the filled capsule body on which it is laid.

In particular, the shearing device may comprise:
- means for engaging said second strip to slide along a preset path, along which it has at least one stretched section, and
- a punch for punching said stretched section of the second strip, so as to separate one or more portions (for example discoidal) thereof individually defining one of said lids.

The means for transferring the lids can be configured to lay one of said lids on the mouth of each intact capsule body, when the latter, by advancing along the path defined by the second conveyor, is at a predetermined closing position that is located downstream of the filling position, and possibly of the pressing position (with respect to the direction of advancement of the supports).

For example, the means for transferring the lids may include the punch of the shearing device, which may be adapted to push each lid into contact with the mouth of the respective capsule body.

The means for welding the lids can be configured to weld each lid on the mouth of the respective intact capsule body, when the latter, by advancing along the path defined by the second conveyor, is at a predetermined welding position that is located downstream of the closing position (with respect to the direction of advancement of the supports). According to one aspect of the invention, the plant may then comprise means for checking the integrity of the sealed capsule bodies.

These means may comprise, for each sealed capsule body:
- a second covering element adapted to be laid on the support of the second conveyor in which the sealed capsule body is housed, so that said second covering element hermetically closes the mouth of the sealed capsule body and defines with the lid of the latter a control volume separated from the internal volume of the capsule body,
- a vacuum pump to suck air from the control volume, while the mouth is hermetically closed by the second covering element,
- a pressure sensor for measuring the pressure prevailing in said control volume, during and/or after air suction, while the mouth is still hermetically closed by the second covering element,
- an electronic control unit configured to identify the sealed capsule body as intact, if the measured pressure is lower than a predetermined threshold value.

One aspect of the invention also provides that the plant may comprise means for advancing, during suction and measurement, the second covering element together with the support on which it is laid, along at least a section of the path defined by the second conveyor.

Another aspect of the invention provides that the means for checking the integrity of the sealed capsule bodies may comprise one or more cameras for taking images of the lid of each capsule body advancing along the path defined by the second conveyor, and that the electronic control unit may be configured to carry out a visual check of said lids, by means of the images taken by the cameras.

According to a further aspect of the invention, the plant may comprise means for weighing the sealed and intact capsule bodies.

### Brief description of the drawings

Further features and advantages of the invention will be more apparent after reading the following description provided by way of a non-limiting example, with the aid of the accompanying drawings.

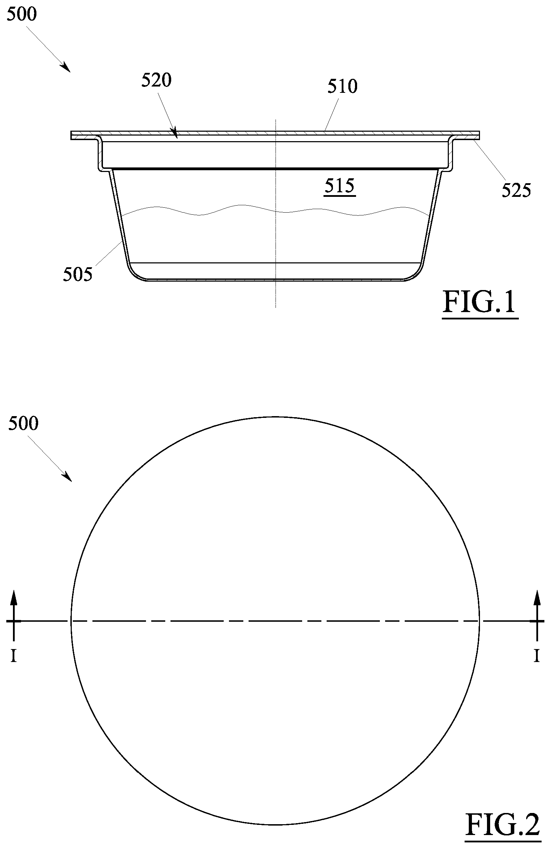

Figure 1 shows a capsule for the preparation of beverages, sectioned according to the plane I-I indicated in figure 2.
Figure 2 is a plan view of the capsule of figure 1.

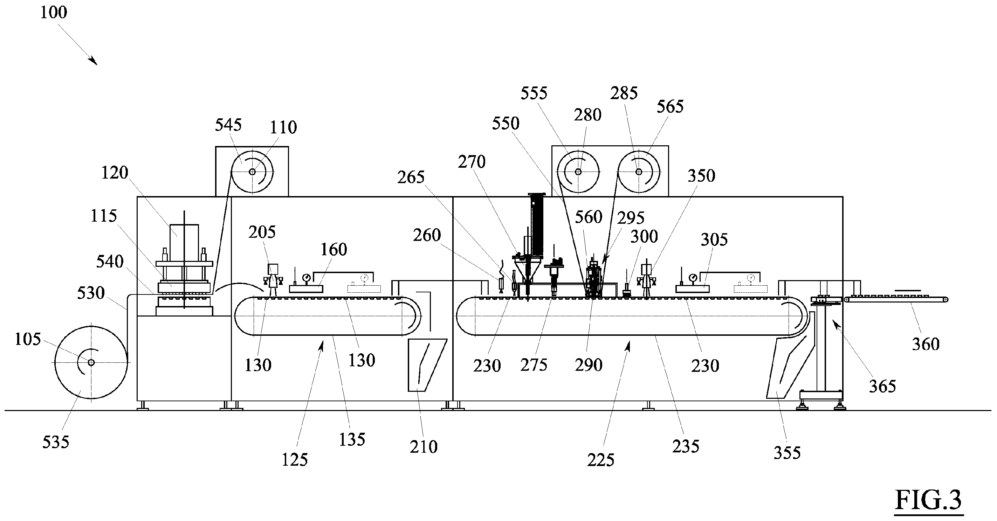

Figure 3 is a diagram of a plant for the manufacture of capsules of the type illustrated in figure 1.
Figure 4 is the section of a support for the capsule bodies associated with the first conveyor of the plant of figure 1, shown during a step for checking the integrity of the capsule body.
Figure 5 is the section of a support for the capsule bodies which is associated with the second conveyor of the plant of figure 1, shown during a step for checking the integrity of the finished capsule.

### Detailed description

With the aid of the aforementioned figures, a plant 100 is described for the manufacture of capsules 500 for the preparation of beverages, for example coffee, in particular capsules intended for use inside special machines, so-called extractors, which extract the beverage from each capsule 500, through an infusion and/or percolation process.

The capsules 500 in question comprise, individually, a capsule body 505 containing a dose of a food substance, for example ground roasted coffee, adapted to produce the beverage by contact with hot water, and a lid 510 that closes the capsule body 505. The capsule body 505 has a generally concave shape, for example glass or little cup-shaped, and defines (delimits) an internal volume 515 that is open at a mouth 520.

The lid 510, preferably of a flat shape, closes said mouth 520, for example by being laid and fixed (welded) to a flat annular flange 525 that surrounds the mouth 520 and that can be made as a single body with the capsule body 505.

According to one aspect of the present invention, the capsule bodies 505 are obtained from a first strip 530 of a cellulose-based, preferably biodegradable, material.

For example, the cellulose-based material may comprise cellulosic fibres, paper, paperboard, cellulosic pulp, cellulose nano-fibres, airlaid cellulose, and/or delignified wood. The first strip 530 may consist entirely of this cellulose-based material, for example of paper, or may optionally comprise also one or more other, preferably biodegradable, materials.

The first strip 530 may further have a monolayer structure or a multilayer structure.

In some embodiments, the material or composition of materials composing the first strip 530 may optionally also provide a barrier effect against moisture and/or gases.

For example, the first strip 530 may have a monolayer structure that is sufficiently thick and/or having a composition such that it provides gas and/or moisture barrier properties. Alternatively, the first strip 530 may have a multilayer structure with a layer consisting of a cellulose-based material, for example of paper, and a barrier layer, for example of polymeric (preferably biodegradable) material with gas and/or moisture barrier properties. In any case, the first strip 530 of cellulose-based material is pre-formed and can be found wound in a reel 535.

For making the capsule bodies 505, it is provided that the first strip 530 can be unwound from the reel 535 and engaged to slide in a preset path, along which it has at least one (flat) stretched section 540, preferably horizontal.

To this end, the plant 100 may for example comprise a first support shaft 105 for the reel 535 and a second support shaft 110, spaced from the first support shaft 105, for a collection winder 545 to which a free end of the first strip 530 may be fixed.

The first support shaft 105 and/or the second support shaft 110 can be driven in rotation by means of appropriate motors, so that the first strip 530 is progressively unwound from the reel 535 and wound on the collection winder 545, after having completed the preset path.

Optionally, in order to guide the first strip 530 along said path, the plant 100 may comprise one or more return rollers and/or other suitable guide means (not illustrated).

In particular, it is provided that the sliding of the first strip 530 can take place intermittently or in steps.

After each step, the stretched section 540 of the first strip 530 can be pressed by means of a shaped mould 115 (for example formed by a pad and a matrix of conjugate shapes), which is adapted to deform one or more portions of said stretched section 540, giving each of them a concave shape defining a respective capsule body 505.

To perform this operation, the plant 100 may therefore comprise a press 120 that carries the shaped mould 115 through which the stretched section 540 of the first strip 530 passes.

After each pressing step, the deformed portions that define the individual capsule bodies 505 can be individually separated from the first strip 530, for example by means of a cutting or shearing operation of the stretched section 540, with which it is also possible to make the possible annular flange 525 that surrounds the mouth 520 thereof.

This cutting or shearing operation can take place at the same time as pressing, for example by means of blades that move together with the shaped mould 115 but which come into contact with the stretched section 540 of the first strip 530 after deformation, or by means of an independent cutting device, positioned for example along the path of the first strip 530 downstream of the press 120.

In both cases, it is preferable that the cutting or shearing step leaves a continuous scrap that can be wound on the collection winder 545, to allow the first strip 530 to be dragged. Once the individual capsule bodies 505 are obtained, each of them can be transferred onto a first conveyor 125.

This first conveyor 125 may comprise a plurality of supports 130 and movement means adapted to engage said supports 130 to move in succession along a preset closed path, which may comprise a straight and preferably horizontal operating section.

Preferably, the advancement of the supports 130 along said path can take place discontinuously or in steps.

The movement means can comprise, for example, a belt or a chain 135 (or a plurality of parallel belts or chains), which is wound like a closed loop around two or more return wheels (of which at least one motorized), and to which the supports 130 are fixed in succession.

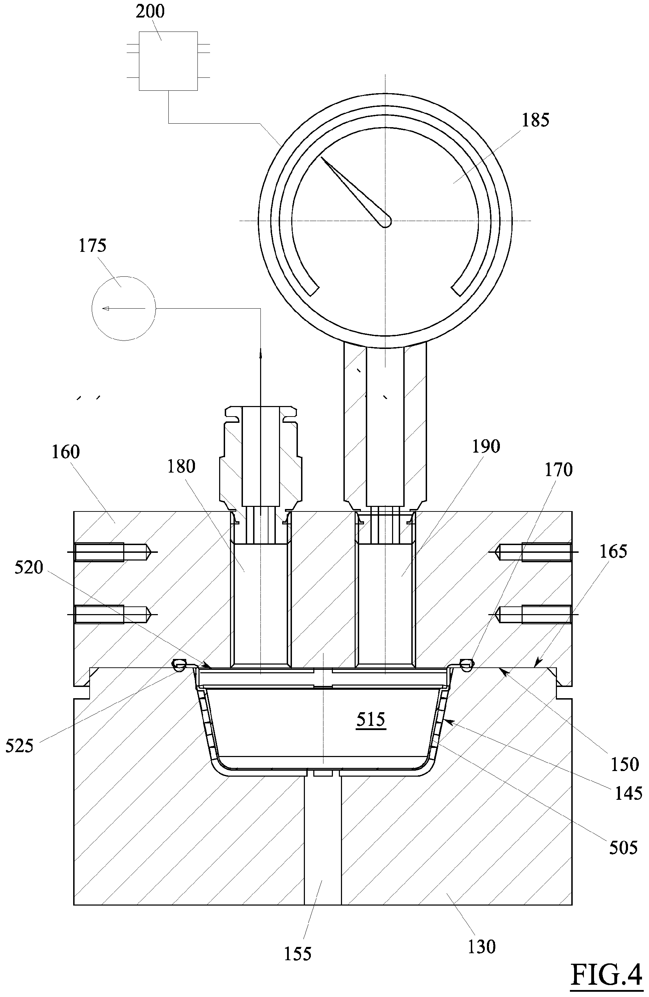

As illustrated in figure 4, each support 130 is provided with at least one receiving seat 145 for a capsule body 505, which can be defined by a cavity obtained on an interface surface 150, preferably flat, of the respective support 130.

At least when the support 130 is in the operating section of its path, said interface surface 150 can be substantially horizontal, with the receiving seat 145 facing upwards.

The shape and dimensions of the receiving seat 145 are chosen so as to be able to receive through insertion a capsule body 505 substantially to size, with the possible annular flange 525 that remains laying on the interface surface 150.

At the bottom of the receiving seat 145, a channel 155 can be made which is adapted to put it in communication with the outside.

Although only one receiving seat 145 has been illustrated in figure 4, it is preferable that each support 130 can be provided with a plurality of said receiving seats 145, which are mutually aligned in a transverse (e.g. orthogonal) direction with respect to the direction of advancement of the first conveyor 125.

Where operations carried out with reference to a receiving seat 145 will be described below, it should therefore be understood that the same operations can be carried out simultaneously for all receiving seats 145 of the same support 130.

As anticipated, each capsule body 505 that is separated from the first strip 530 can be transferred inside a receiving seat 145 of the first conveyor 125, preferably when the relative support 130 is at the beginning in the operating section of the path.

This transfer can take place continuously and in a coordinated manner with the moulding and shearing steps.

For example, all the capsule bodies 505 that are obtained in a moulding and shearing cycle of the first strip 530, can be immediately transferred inside corresponding receiving seats 145 of the first conveyor 125, for example before and/or during the execution of a subsequent moulding and shearing cycle.

To perform this transfer, the plant 100 can be provided with suitable transfer means, which are not illustrated since they are per se known to the person skilled in the art, such as for example a manipulator (e.g. robot) provided with a member for gripping and releasing the capsule bodies 505.

After the transfer, there is provided a step for checking the integrity of the capsule bodies 505 advancing on the first conveyor 125.

To perform this check, the plant 100 may comprise at least one first covering element 160, which is laid on one or more of the supports 130 that are located in the operating section of the path defined by the first conveyor 125, in such a way that said first covering element 160 hermetically closes the mouth 520 of the capsule body 505 received in each corresponding receiving seat 145.

In particular, the first covering element 160 may comprise an interface surface 165, preferably flat, which is laid on the interface surface 150 of the support 130, for example by vice-clamping the possible annular flange 525 of the capsule body 505.

To improve the tightness of this clamping, the interface surface 165 may carry an annular seal 170 that compresses against the annular flange 525 of the capsule body 505. While the mouth 520 of the capsule body 505 is hermetically closed by the first covering element 160, the internal volume 515 of the capsule body 505 is brought into depression through an action of sucking the air that is contained therein.

This suction can be performed with the aid of a vacuum pump 175, which can be put in communication with the internal volume 515 of the capsule body 505 through a channel 180 obtained in the first covering element 160 and any further connection ducts.

After and/or during sucking, while the mouth 520 of the capsule body 505 is still closed by the first covering element 160, the measurement of the pressure prevailing in the internal volume 515 of the capsule body 505 is provided.

This measurement can be performed with a pressure sensor 185 installed on the first covering element 160 and in communication with the internal volume of the capsule body 505 via a channel 190 obtained in the first covering element 160 itself.

If the measured pressure is below a predetermined threshold value, it means that the capsule body 505 effectively prevents the passage of air coming from the channel 155 obtained at the bottom of the receiving seat 145, from which it follows that the capsule body 505 is intact.

Otherwise it means that the air can pass quite freely through the capsule body 505, from which it follows that the latter is not intact but has, for example, cuts and/or tears.

To perform this check, the pressure sensor 185 can therefore be connected with an electronic control unit 200, which can be configured to identify whether the capsule body 505 is intact or not, depending on whether the measured pressure is respectively lower or higher than the aforementioned threshold value.

It should be noted that, at least in some cases, the time required to perform the suction and pressure measurement steps may be relatively long.

Therefore, it is provided that the suction and pressure measurement steps can take place while the first covering element 160 is advancing, together with the support(s) 130 on which it is laid, along at least a section of the path defined by the first conveyor 125. For this reason, the plant 100 may comprise means for moving the first covering element 160, not illustrated since they are per se known to the person skilled in the art, such as for example a pilgrim step translator, which are adapted to lay the first covering element 160 on the support(s) 130, when it is in a first position along the operating section of the path defined by the first conveyor 125, to advance it together with the support(s) 130 up to a second position located downstream of the first (with respect to the direction of advancement imposed by the first conveyor 125), to then lift it from the support(s) 130 and move it backwards, so that the cycle can be repeated with an/other support(s) 130 which, in the meantime, has/have been brought at the first position.

In addition to the leak test outlined above, the check of the integrity of the capsule bodies 505 may also provide for a visual inspection, for example by taking images, of each of the capsule bodies 505 advancing along the path defined by the first conveyor 125. This visual inspection, which preferably takes place before the leak test, can be carried out with the aid of one or more cameras 205, which can be connected with the electronic control unit 200 which, for example by means of the execution of appropriate software, can be configured to establish, from the images taken by the cameras 205, whether the capsule bodies 505 are intact or whether, for example, they are deformed or in any case do not have a shape conforming to the specifications required by the production.

Once the end of the operating section of the path defined by the first conveyor 125 has been reached, the capsule bodies 505 identified as non-intact (by visual inspection and/or leak test) can be discarded, for example by simply dropping them or otherwise transferring them into a collection container 210 placed downstream or next to the first conveyor 125.

The capsule bodies 505 identified as intact (both by the leak test and by any visual inspection) may instead be subjected to a filling step, in which each intact capsule body 505 is filled with the dose of the edible substance, and to a subsequent sealing step, in which each filled capsule body 505 is closed/sealed with a respective lid 510, so as to obtain the finished capsule 500.

Before the filling step, the capsule bodies 505 can be subjected to a washing step by blowing neutral gas, for example in order to remove any impurities, such as for example dust grains, which could otherwise contaminate the edible substance.

Between the filling and sealing steps, an intermediate step for compacting the dose of edible substance contained in the capsule bodies 505 can also be provided.

In addition, after sealing, a step for checking the integrity of the finished capsules 500 and, possibly, a subsequent step for weighing the same can be provided.

In any case, to perform these further steps, the capsule bodies 505 identified as intact can be transferred from the first conveyor 125 to a second conveyor 225.

This second conveyor 225 may be analogous to the first one, i.e. it may comprise a plurality of supports 230 and movement means adapted to engage said supports 230 to move in succession along a preset closed path, which may comprise for example a straight and preferably horizontal operating section.

Preferably, the advancement of the supports 230 along said path can take place discontinuously or in steps.

The movement means can comprise, for example, a belt or a chain 235 (or a plurality of parallel belts or chains), which is wound like a closed loop around two or more return wheels (of which at least one motorized), and to which the supports 230 are fixed in succession.

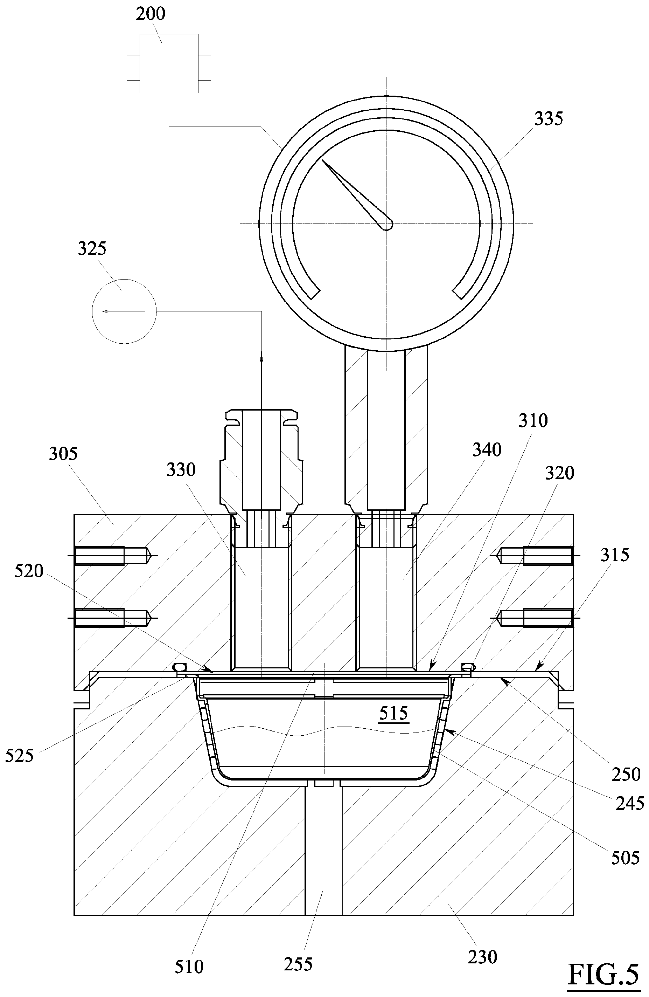

As illustrated in figure 5, each support 230 is provided with at least one receiving seat 245 for a capsule body 505, which can be defined by a cavity obtained on an interface surface 250, preferably flat, of the respective support 230.

At least when the support 230 is in the operating section of its path, said interface surface 250 can be substantially horizontal, with the receiving seat 245 facing upwards.

The shape and dimensions of the receiving seat 245 are chosen so as to be able to receive through insertion a capsule body 505 substantially to size, with the possible flange 525 that remains laying on the interface surface 250.

At the bottom of the receiving seat 245, a channel 255 can be made which is adapted to put it in communication with the outside.

Although only one receiving seat 245 has been illustrated in figure 5, it is preferable that each support 230 can be provided with a plurality of said receiving seats 245, which are mutually aligned in a transverse (e.g. orthogonal) direction with respect to the direction of advancement of the second conveyor 225.

Where operations carried out with reference to a receiving seat 245 will be described below, it should therefore be understood that the same operations can be carried out simultaneously for all receiving seats 245 of the same support 230.

As anticipated, each capsule body 505 identified as intact can be extracted from the respective receiving seat 145 of the first conveyor 125 and inserted in a respective receiving seat 245 of the second conveyor 225, preferably when the relative support 230 is at the beginning in the operating section of its path.

This transfer can take place in a continuous and coordinated manner with the operation of the first conveyor 125.

For example, all capsule bodies 505 identified as intact that, on board the respective support 130, arrive at a predetermined release position at the end of the operating section of the path defined by the first conveyor 125, can be transferred inside corresponding receiving seats 245 that are made available by a support 230 of the second conveyor 225, which is in a predetermined reception position at the beginning of the operating section of its path.

For example, the advancement and stop steps of the first and second conveyor 125 and 225 can be simultaneous so that, during the stop steps, all capsule bodies 505 identified as intact that are on board the support 130 in the release position can be transferred to the support 230 in the reception position.

To perform this transfer, the plant 100 can be provided with suitable transfer means, which are not illustrated since they are per se known to the person skilled in the art, such as for example a manipulator (e.g. robot) provided with a member for gripping and releasing the capsule bodies 505.

After the transfer it is eventually possible to identify which receiving seats 245 of the second conveyor 225 actually receive a capsule body 505 and which are empty.

The plant 100 may therefore comprise one or more cameras 260 adapted to take images of each support 230, when the latter passes in a predetermined control position along the operating section of the path defined by the second conveyor 225.

These cameras 260 may be connected to the electronic control unit 200, which may be configured to identify which receiving seats 245 are occupied and which are empty. Such identification may be particularly useful to avoid improperly performing the subsequent steps of the process, in particular those of filling and sealing, on receiving seats 245 that are not carrying any capsule body 505.

The plant 100 may further comprise one or more nozzles 265 adapted to blow neutral gas into each intact capsule body 505, so as to perform the aforementioned washing step.

In particular, these nozzles 265 can be adapted to blow the neutral gas on each intact capsule body 505, when the latter, by advancing along the path defined by the second conveyor 225, is at a predetermined washing position that is preferably located downstream of the control position (with respect to the direction of advancement of the supports 230).

Subsequently, the capsule bodies 505 identified as intact are subjected to the filling step. To perform this filling step, the plant 100 may comprise a dosing device 270, which is adapted to dispense the dose of edible substance inside each intact capsule body 505, when the latter, by advancing along the path defined by the second conveyor 225, is at a predetermined filling position, which is preferably located downstream of any washing position (with respect to the direction of advancement of the supports 230).

The plant 100 may further comprise a pad 275, which is adapted to compress the dose of edible substance contained inside each filled capsule body 505, when the latter, by advancing along the path defined by the second conveyor 225, is at a predetermined pressing position that is located downstream of the filling position (with respect to the direction of advancement of the supports 230).

After filling and possible compaction, the capsule bodies 505 filled with the dose of edible substance are individually sealed with the respective lid 510.

Preferably, the lids 510 are made in line and then individually transferred to lay on the mouth 520 of a respective capsule body 505 previously filled, for example on the annular flange 525 of the latter, and welded to it.

In particular, the lids 510, which can be shaped as flat disks, can be made from a second strip 550 of a cellulose-based, preferably biodegradable, material.

The material of the second strip 550 may be of the same type as previously described with reference to the material of the first strip 530 or, more preferably, the first strip 530 and the second strip 550 may be of the same identical material.

Like the first strip 530, the second strip 550 is also preformed and can be found wound in a reel 555.

For making the lids 510, it is provided that the second strip 550 can be unwound from the reel 555 and engaged to slide in a preset path, along which it has at least one (flat) stretched section 560, preferably horizontal.

To this end, the plant 100 may comprise, for example, a third support shaft 280 for the reel 555 and a fourth support shaft 285, spaced from the third support shaft 280, for a collection winder 565 to which a free end of the second strip 550 may be fixed.

The third support shaft 280 and/or the fourth support shaft 285 can be driven in rotation by means of appropriate motors, so that the second strip 550 is progressively unwound from the reel 555 and wound on the collection winder 565, after having completed the preset path.

Optionally, to guide the second strip 550 along said path, the plant 100 may comprise one or more return rollers and/or other suitable guide means (not illustrated).

In particular, it is provided that the sliding of the second strip 550 can take place intermittently or in steps.

After each step, the stretched section 560 of the second strip 550 can be punched, by means of a punch 290, which is adapted to cut/shear the stretched section 560, by separating one or more portions (for example of flat disc shape) individually adapted to define a lid 510.

To perform this operation, the plant 100 may therefore comprise a shearing device 295, at which the stretched section 560 of the second strip 550 passes.

In addition to the punch 290, this shearing device 295 generally also comprises actuating members adapted to move the punch 290 towards and away from the stretched section 560 of the second strip 550, so as to allow the punch 290 to separate by punching the portions of the second strip 550 that form the lids 510.

Of course, it is preferable that the punching step leaves a continuous scrap that can be wound on the collection winder 565, to allow the second strip 550 to be dragged.

After each punching step, the individual portions of the second strip 550 that define the lids 510 can be transferred to lay on the mouth 520 of a respective filled capsule body 505, when the latter, by advancing along the path defined by the second conveyor 225, is at a predetermined closing position that is located downstream of the filling position, and possibly of the pressing position (with respect to the direction of advancement of the supports 230).

In particular, the transfer of each lid 510 can be carried out by the same punch 290 which, by continuing the movement with which it has operated the shearing of the stretched section 560 of the second strip 550, can directly push the lid 510 just sheared, towards and in contact with the mouth 520 of the respective capsule body 505.

To this end, the shearing device 295 can then be positioned so that the punch 290 is vertically aligned with each of the capsule bodies 505, when the latter is in the closing position.

Finally, the step of sealing the filled capsule bodies 505 provides for welding each lid 510 to the capsule body 505 on which it has been laid, for example to the annular flange 525. For this reason, the plant 100 may comprise welding means 300, for example a welding bar, configured to weld each lid 510 on the mouth 520 (e.g. on the annular flange 525) of the respective capsule body 505, when the latter, by advancing along the path defined by the second conveyor 225, is at a predetermined welding position that is located downstream of the closing position (with respect to the direction of advancement of the supports).

However, it is not excluded that, in other embodiments, the welding can take place when the capsule body 505 is still in the closing position, simultaneously or in any case immediately after the lid 510 has been laid on its mouth 520.

As anticipated, once the sealing of the capsule bodies 505 has been completed, it is possible to perform a check of the integrity of the same.

To perform this check, the plant 100 may comprise at least one second covering element 305, which is laid on one or more of the supports 230 that are in the operating section of the path defined by the second conveyor 225, in such a way that said second covering element 305 hermetically closes the mouth 520 of the capsule body 505 (already sealed) received in each corresponding receiving seat 245.

In this way, since the mouth 520 of the capsule body 505 is also closed by the respective lid 510, between the latter and the aforementioned second covering element 305 a (at least very thin) control volume 310 (see fig.5) remains defined which is therefore separated from the internal volume 515 of the capsule body 505 by the lid 510.

In particular, the second covering element 305 can comprise an interface surface 315, preferably flat, which is laid on the interface surface 250 of the support 230, for example by vice-clamping the possible annular flange 525 of the capsule body 505 and the edge of the lid 510 laid and welded on it.

To improve the tightness of this clamping, the interface surface 315 may carry an annular seal 320 that compresses against the edge of the lid 510.

While the mouth 520 of the capsule body 505 (filled and sealed) is hermetically closed by the second covering element 305, the control volume 310 is brought into depression by an action of sucking air from the inside thereof.

This suction can be performed with the aid of a vacuum pump 325, which can be put in communication with the control volume 310 through a channel 330 obtained in the second covering element 305 and any connection ducts.

After and/or during suction, while the mouth 520 of the capsule body 505 is still closed by the second covering element 305, the measurement of the pressure prevailing in the control volume 310 is provided.

This measurement can be performed with a pressure sensor 335 installed on the second covering element 305 and in communication with the control volume 310 via a channel 340 obtained in the second covering element 305 itself.

If the measured pressure is below a predetermined threshold value, it means that the lid 510 effectively prevents the passage of air coming from the channel 255 obtained at the bottom of the receiving seat 245, from which it follows that the filled and sealed capsule body 505 is intact, i.e. that the lid 510 does not have cuts or tears, is correctly positioned and has been effectively welded.

Otherwise, it means that the air can pass quite freely through the lid 510, from which it follows that the latter has, for example, cuts and/or tears, or is wrongly positioned or has not been completely welded, in practice that the finished capsule 500 (i.e. the filled and sealed capsule body 505) is not intact.

To perform this check, the pressure sensor 335 can therefore be connected with the electronic control unit 200, which can be configured to identify whether the finished capsule 500 is intact or not, depending on whether the measured pressure is respectively lower or higher than the aforementioned threshold value.

It should be noted that, at least in some cases, the time required to perform the suction and pressure measurement steps may be relatively long.

Therefore, it is provided that the suction and pressure measurement steps can take place while the second covering element 305 is advancing, together with the support 230 on which it is laid, along at least a section of the path defined by the second conveyor 225. The plant 100 may comprise means for moving the second covering element 305, not illustrated since they are per se known to the person skilled in the art, such as for example a pilgrim step manipulator, which are adapted to lay the second covering element 305 on the support(s) 230, when it is in a first position along the operating section of the path defined by the second conveyor 225, to advance it together with the support(s) 230 up to a second position located downstream of the first (with respect to the direction of advancement imposed by the second conveyor 225), to then lift it from the support(s) 230 and move it backwards so that the cycle can be repeated with one or more other supports 230 which in the meantime have been brought at the first position.

In addition to the leak test outlined above, the check of the integrity of the finished capsules 500 (i.e. of the filled and sealed capsule bodies 505) may also provide for a visual inspection, for example by taking images, of the lid 510 applied to each of the capsule bodies 505 advancing along the path defined by the second conveyor 225.

This visual inspection, which preferably takes place before the leak test, can be carried out with the aid of cameras 350, which can be connected with the electronic control unit 200 which, for example by means of the execution of appropriate software, can be configured to establish from the images taken by the cameras 350 whether the lids 510 are intact or whether, for example, they are torn or wrongly positioned.

Once the end of the operating section of the path defined by the second conveyor 225 has been reached, the finished capsules 500 identified as non-intact (by visual inspection and/or by leak test) can be discarded, for example by dropping them into a collection container 355 placed downstream or next to the second conveyor 225.

The finished capsules 500 identified as intact (both by the leak test and by any visual inspection) can instead be subjected to a weighing step, typically to ascertain that they are filled with the right dose of edible substance.

The finished capsules 500 that do not respect the expected weight can also be discarded, for example inside the collection container 355 or in another similar container, while the capsules 500 that respect the expected weight can be transferred on an outlet conveyor 360, to be sent, for example, to packaging.

To perform the latter operations, the plant 100 can therefore comprise a weighing device (or scale) 365, for example provided with load cells and connected with the electronic control unit 200, and handling means, not illustrated as they are per se known to the person skilled in the art, which are adapted to transfer the capsules 500 identified as intact from the second conveyor 225 to said weighing device 365, as well as from the latter selectively to the outlet conveyor 360 or as waste to the collection container. Obviously, a person skilled in the art can make numerous modifications of a technical application nature to everything described, without thereby departing from the scope of the invention as claimed below.

## Claims

1. A method for the manufacture of capsules (500) for the preparation of beverages, comprising at least the steps of:
- arranging a first strip (530) of a cellulose-based material,
- obtaining from said first strip (530) a plurality of concave capsule bodies (505), each of which defines an internal volume (515) open at a mouth (520),
- filling one or more of said capsule bodies (505) with a dose of an edible substance adapted to make the beverage, and
- sealing the mouth (520) of the filled capsule bodies (505), with a lid (510) of a cellulose-based material,
wherein the step of obtaining the capsule bodies (505) provides for:
- engaging said first strip (530) to slide in a preset path, along which it has at least one stretched section (540),
- pressing said stretched section of the first strip (530) by means of a shaped mould (115) adapted to deform one or more portions of said stretched section (540), giving each of them a concave shape defining a respective capsule body (505), and
- separating each of said portions from the first strip (530).

2. A method according to claim 1, comprising, prior to the filling step, the further steps of:
- transferring each capsule body (505) onto a first conveyor (125) provided with a plurality of supports (130), which are movable in succession along a preset path and are individually provided with at least one receiving seat (145) for one of said capsule bodies (505), and
- checking the integrity of the capsule bodies (505) advancing on the first conveyor (125).

3. A method according to claim 2, wherein the step of checking the integrity of the capsule bodies (505) provides, for each capsule body, for:
- laying a first covering element (160) at least on the support (130) of the first conveyor (125) in which the capsule body (505) is housed, so that said first covering element (160) hermetically closes the mouth (520) of the capsule body (505) itself,
- sucking air from the internal volume (515) of the capsule body (505), while the mouth (520) is hermetically closed by the first covering element (160);
- measuring the pressure prevailing in said internal volume (515), during and/or after suction, while the mouth (520) is still hermetically closed by the first covering element (160), and
- identifying the capsule body (505) as intact, if the measured pressure is lower than a predetermined threshold value.

4. A method according to claim 3, wherein the suction and pressure measurement steps take place while the first covering element (160) is advancing, together with the support (130) on which it is laid, along at least a section of the path defined by the first conveyor (125).

5. A method according to any one of claims 2 to 4, wherein the step of filling the capsule bodies (505) provides for:
- transferring each intact capsule body (505) from the first conveyor (125) to a second conveyor (225) provided with a plurality of supports (230), which are movable in succession along a preset path and are individually provided with at least one receiving seat (245) for one of said intact capsule bodies (505),
- dispensing the dose of edible substance inside each intact capsule body (505), when the latter, by advancing along the path defined by the second conveyor (225), is at a predetermined filling position.

6. A method according to claim 5, comprising the step of compressing the dose of edible substance contained inside each filled capsule body (505), when the latter, by advancing along the path defined by the second conveyor (225), is at a predetermined pressing position that is located downstream of the filling position.

7. A method according to claim 5 or 6, comprising the step of blowing a neutral gas inside each intact capsule body (505), when the latter, by advancing along the path defined by the second conveyor (225), is at a predetermined washing position that is located upstream of the filling position.

8. A method according to any one of the preceding claims, wherein the step of sealing the mouth (120) of the filled capsule bodies (505) provides for:
- arranging a second strip (550) of a cellulose-based material,
- obtaining from said second strip (550) a plurality of said lids (510),
- transferring each of said lids (510) to lay on the mouth (520) of a respective filled capsule body (505), and
- welding each lid (510) to the mouth (520) of the filled capsule body (505) on which it is laid.

9. A method according to claim 8, wherein the step of obtaining the lids (510) provides for:
- engaging said second strip (550) to slide along a preset path, along which it has at least one stretched section (560),
- punching said stretched section (560) of the second strip (550), by means of a punch (290), so as to separate one or more portions thereof individually defining one of said lids (510).

10. A method according to any one of the preceding claims, comprising the step of checking the integrity of the sealed capsule bodies (505).

11. A method according to claims 5 and 10, wherein the step of checking the integrity of the sealed capsule bodies (505) provides, for each sealed capsule body (505), for:
- laying a second covering element (305) on the support (230) of the second conveyor (225) in which the sealed capsule body (505) is housed, so that said second covering element (305) hermetically closes the mouth (520) of the sealed capsule body and defines with the lid (510) of the latter a control volume (310) separated from the internal volume (515) of the capsule body (505),
- sucking air from the control volume (310), while the mouth (520) is hermetically closed by the second covering element (305),
- measuring the pressure prevailing in said control volume (310), during and/or after air suction, while the mouth (520) is still hermetically closed by the second covering element (305),
- identifying the sealed capsule body (505) as intact, if the measured pressure is lower than a predetermined threshold value.

12. A method according to claim 11, wherein the suction and pressure measurement steps take place while the second covering element (305) is advancing, together with the support (230) on which it is laid, along at least a section of the path defined by the second conveyor (225).

13. A plant (100) for the manufacture of capsules (500) for the preparation of beverages, which comprises:
- a forming device (115, 120) for obtaining, from a first strip (530) of cellulose-based material, a plurality of capsule bodies (505), each of which defines an internal volume (515) open at a mouth (520),
- means (270) for filling one or more of said capsule bodies (505) with a dose of an edible substance adapted to make the beverage, and
- means (295, 300) for sealing the mouth (520) of the filled capsule bodies (505), with a lid (510) of a cellulose-based material,
wherein the forming device comprises:
- means (105, 110) for engaging said first strip (530) to slide in a preset path, along which the first strip (530) has at least one stretched section (540),
- a press (120) for pressing said stretched section (540) of the first strip (530) with a shaped mould (115) adapted to deform one or more portions of said stretched section (540), giving each of them a concave shape defining a respective capsule body (505), and
- means for separating each of said portions from the first strip (530).
